Europäisches Patentamt

**European Patent Office**

**Office européen des brevets**

(19)

(11) Publication number: **0 194 001**

**A1**

(12)

# EUROPEAN PATENT APPLICATION

(21) Application number: **86300121.0**

(22) Date of filing: **09.01.86**

(51) Int. Cl.⁴: **F 16 D 13/71**

(30) Priority: **06.02.85 GB 8502977**

(43) Date of publication of application: **10.09.86**
Bulletin **86/37**

(84) Designated Contracting States: **DE FR GB IT**

(71) Applicant: **AUTOMOTIVE PRODUCTS PUBLIC LIMITED COMPANY, Tachbrook Road, Leamington Spa Warwickshire CV31 3ER (GB)**

(72) Inventor: **Maycock, Ian Commander, 149 Cubbington Road Lillington, Leamington Spa Warwickshire (GB)**

(74) Representative: **Kinrade, John, Automotive Products plc Patent Department Tachbrook Road, Leamington Spa Warwickshire, CV31 3ER (GB)**

(54) **Diaphragm spring clutch cover assembly.**

(57) The clutch cover assembly comprises a cover 4, a pressure plate 10, and a diaphragm spring 8 having actuating fingers 16. The spring 8 acts between a fulcrum 20 on the pressure plate and a fulcrum arrangement 28 on the cover 4. Fulcrum arrangement 28 comprises two concentric, wavy wire rings 30 and 32. Ring 30 has undulations of greater amplitude and wave-length than the undulations of ring 32. During re-engagement of the clutch by releasing the fingers 16 to move in direction Y, the re-engagement is cushioned by first compressing the softer undulations of ring 30 and then in a second stage by compressing the undulations of both rings.

# DIAPHRAGM SPRING CLUTCH COVER ASSEMBLY

This invention concerns a diaphragm spring clutch cover assembly of the type (hereinafter called "the type referred to") comprising a pressure plate, a cover, a diaphragm spring having a plurality of radially inwardly directed fingers, and said diaphragm spring acting between a first annular fulcrum arrangement on the pressure plate and a second annular fulcrum arrangement on the cover.

In use the assembly is secured to a driving member, for example a fly-wheel of a motor vehicle engine, so that a driven plate is clamped between the pressure plate and the driving member by the load of the diaphragm spring, the driven plate being released by an axial effort applied through a release bearing to radially inner ends of the fingers of the diaphragm spring.

In well known clutches comprising cover assemblies of the type referred to the driven plate is cushioned in that it comprises a carrier plate having friction facings mounted on cushioning between the facings. But to simplify and cheapen production of driven plates and to reduce inertia thereof, driven plates with reduced or no cushioning between the friction facings have been proposed. To compensate for this lack of cushioning it has been proposed to incorporate means which provides a degree of axial flexibility or cushioning into one of the annular fulcra in a diaphragm spring clutch assembly of the type referred to. One way of providing cushioning means in the clutch cover assembly which is simple to manufacture and install and yet provides a subjectively acceptable clutch engagement when mounted in a motor vehicle is disclosed in G.B. 1583403. That patent describes a diaphragm spring clutch cover assembly of the type referred to further comprising cushioning means in one of the annular fulcra arrangements, the cushioning means being formed by a single wavy ring having undulations which extend parallel to the axis of the diaphragm spring, and the undulations being constituted by a first series and by a second series of said undulations wherein the undulations of the first series have a lower stiffness but greater axial amplitude and wavelength than the undulations of the second series. During re-engagement of the driven plate (after a disengagement ) the initial cushioning is by the first series and then by both series, which ensures that the clamp load increases progressively over a substantial range of movement of the release bearing during clutch re-engagement.

It has been found that manufacturing a wavy ring having undulations of differing stiffnesses and sizes can be difficult in mass production.

An object of this invention is to provide a diaphragm spring clutch cover assembly of the type referred to capable of being constructed, as will be understood from the ensuing description with reference to the drawings, in which the aforesaid difficulty can be avoided and at the same time that assembly can be used to form a clutch for a motor vehicle in which clutch engagement is subjectively acceptable and the clamp load increases progressively during re-engagement.

According to the invention there is provided a diaphragm spring clutch cover assembly comprising a pressure plate, a cover, a diaphragm spring having a plurality of radially inwardly directed fingers, said diaphragm spring acting between a first annular fulcrum arrangement on the pressure plate and a second annular fulcrum arrangement on the cover, characterised in that at least one of said fulcrum arrangements comprises cushioning means of at least first and second resilient substantially concentric wavy rings substantially coaxial with the diaphragm spring, and in that each ring has undulations extending substantially parallel to the axis of the diaphragm spring.

The undulations of the first wavy ring may be more stiff in axial compression (in the axial direction of the diaphragm spring) than the undulations of the second wavy ring. In such a case it is preferred that during a clutch engaging movement of the diaphragm spring that the first wavy ring is subject to axial compression after the second wavy ring. The amplitude of any undulation in the second ring may be greater than the amplitude of any undulation in the first ring.

In one form of the clutch cover assembly the first annular fulcrum arrangement is of greater diameter than the second fulcrum arrangement, load exerted on the pressure plate by the diaphragm spring being reducible by application to the fingers of a force acting axially of the diaphragm spring along a direction towards the pressure plate, and

the first annular fulcrum arrangement comprises aforesaid cushioning means comprising a said first wavy ring surrounded by a said second wavy ring, and /or

the second annular fulcrum arrangement comprises aforesaid cushioning means comprising a said first wavy ring surrounding the second wavy ring.

In another form of the clutch cover assembly the second annular fulcrum arrangement is of greater diameter than the first fulcrum arrangement, load exerted on the pressure plate by the diaphragm spring being reducible by application to the fingers of a force acting axially of the diaphragm spring along a direction away from the pressure plate, and

the second annular fulcrum arrangement comprises aforesaid cushioning means comprising a said first wavy ring surrounded by a said second wavy ring and/or

the first annular fulcrum arrangement comprises aforesaid cushioning means comprising a said first wavy ring surrounding a said second wavy ring.

The invention will now be further described, by way of example, with reference to the accompanying drawings in which:-

Fig. 1 is a plan view of a first embodiment of a diaphragm spring clutch cover assembly formed according to the invention, in an attitude corresponding to full engagement of a clutch comprising the cover assembly;

Fig. 2 is a diagrammatic section on line II-II in Fig. 1;

Fig. 3 is a diagrammatic section on line III - III in Fig. 1;

Fig. 4 is a plan view on reduced scale of a wavy ring used in the assembly in Fig. 1;

Fig. 5 shows fragments of developments of the two wavy rings in Fig. 1;

Fig. 6 is an enlarged fragment of the section in Fig. 3;

Fig. 7 is a fragment of a diagrammatic section, simillar to Fig.6, of a preferred second embodiment of a clutch cover assembly formed according to the invention in the attitude corresponding to full engagement;

Fig. 8 is a diagrammatic cross-section of a fully engaged pull-type clutch including a preferred third embodiment of a clutch cover assembly shown in full lines and formed according to the invention, and

Fig. 9 is a fragment of a diagrammatic cross-section of a fully engaged pull-type clutch including a fourth embodiment of a clutch cover assembly shown in full lines and formed according to the invention.

In the drawings like reference numerals refer to like or comparable parts.

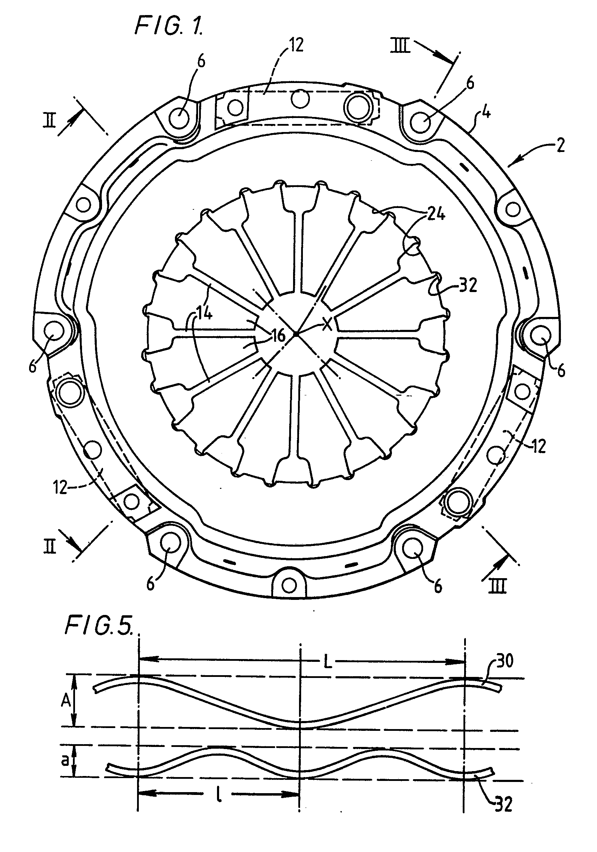

Figs. 1 to 6 show a clutch cover assembly 2 suitable for use in a motor vehicle clutch and comprising

0194001

a cover 4 apertured at 6 for bolts (not shown) to secure the cover assembly to a rotatably driven driving plate ( not shown though represented by chain dot line F) for example a fly-wheel of a motor vehicle engine. The cover assembly further comprises an annular diaphragm spring 8 centred on axis X and an annular pressure plate 10 which rotates with the cover about the axis X due to the cover and pressure plate being interconnected in known manner by tangential, spring driving straps 12. The diaphragm spring is radially slotted at 14 to form a plurality of radially inwardly extending fingers 16. On its side to face the driving plate the pressure plate has a pressure face 18, and when the clutch is in use a driven clutch plate (not shown) of any type known per se is disposed between the pressure face 18 and the driving plate F, the driven clutch plate engaging in known manner an output shaft known per se to be rotatably driven about axis X by the driven plate which is axially slidable relatively to the shaft. On the side of the pressure plate remote from pressure face 18 is an annular fulcrum arrangement 20 centred on axis X and formed by a ridge or rib formation 22. The cover 4 has hooked tabs 24 each disposed in a respective slot 14, the tabs collectively serving to retain an annular fulcrum arrangement 26 also centred on axis X and comprising a wire ring (which may be flat) disposed on the pressure plate side of the diaphragm spring 8. On the cover side of the diaphragm spring there is retained a further annular fulcrum arrangement 28 comprising two resilient concentric wavy rings 30 and 32 centred on axis X, the fulcrum 28 being of less diameter than the fulcrum 20.

When a clutch comprising the cover assembly 2 is in use the aforesaid driven plate is released by axial movement in direction Y towards driven plate F of a clutch release bearing (not shown) known per se which pushes on the radially inner ends of the fingers 16 to relieve the clamp load (derived from the diaphragm spring) exerted on the driven plate by the pressure plate 10. The biasing load of the driven straps 12 ensures in known manner that the pressure plate moves in the opposite direction to Y by an amount which frees the driven plate for clutch release.

The undulations of the wavy rings 30 and 32 provide cushioning so that the clamp load increases progressively during movement of the diaphragm spring during re-engagement the clutch that the re-engagement of the driven plate is smooth.

The undulations of each wavy ring are substantially parallel to the axis X of cover assembly 2. Each wavy ring as exemplified by the ring 30 in Fig. 4 is a split ring. In axial compression the ring 32 is stiffer than the ring 30. One way this may be achieved is shown in Fig. 5 in which both wavy rings 30 and 32 are formed from simillar metal wire. Each respective ring has successive undulations of substantially same sinusoidal wave form; but the sine waves of ring 30 have an amplitude A which is greater than amplitude a of the waves of ring 32, and the wavelength $\ell$ of the waves of the ring 32 is less than the wave-length L of the waves of ring

30. Thus when the troughs of the undulations of both wavy rings are constrained (by the cover 4) in the same plane transverse to the axis X, the peaks of the undulations of the ring 30 project further towards the pressure plate 10 than the peaks of the undulations of the ring 32 when the clutch is fully released.

As the clutch is re-engaged cushioning is first provided by the progressive axial compression of the initially less stiff ring 30 and then by further progressive compression of the ring 30 and the ring 32.

The provision in the cover assembly of Figs 1 to 6 of the wavy ring 30 of relatively low stiffness but greater axial amplitude than the other wavy ring of relatively high stiffness but less axial amplitude gives a smooth engagement characteristic to the clutch so the clutch cover assembly 2 may be used in conjunction with a non-cushioned driven plate and give a subjectively acceptable clutch engagement.

As the cushioning becomes more stiff once the ring 32 commences to be compressed there can be at that point a marked though smooth increase in the clamping load. The point at which that occurs in relation to the clutch engaging movement of the diaphragm spring may be varied by varying the extent to which the peaks on the ring 30 project, towards the diaphragm spring 8, beyond the peaks on the ring 32.

The wavy rings 30 and 32 may be radially spaced by an annular spacer or ring 34 between them.

0194001

The rings 30 and 32 are shown having a circular cross-section, however they may each have any desired cross-sectional shape, for example square or rectangular, and may be formed of strip material. Also the wavy rings may have undulations having a wave form other than sinusiodal.

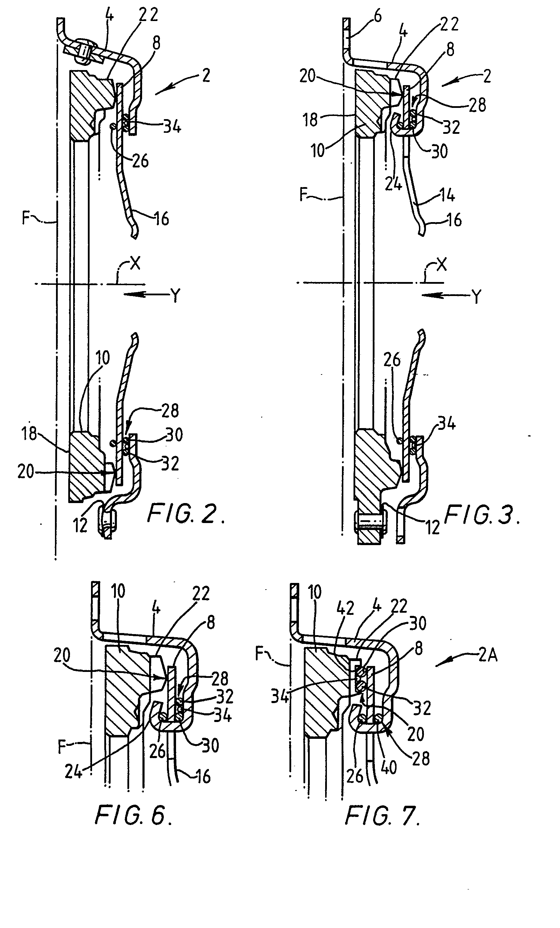

In a preferred embodiment of clutch cover assembly 2 A in Fig. 7 the fulcrum 28 is constituted by a flat wire ring 40 known per se and the fulcrum 20 comprises the two concentric wavy rings 30 and 32 disposed in annular groove 42 in the rib arrangement 22. In this case the less stiff wavy ring 30 is radially outer of the more stiff wavy ring 32 which becomes compressed after the ring 30 during clutch re-engagement.

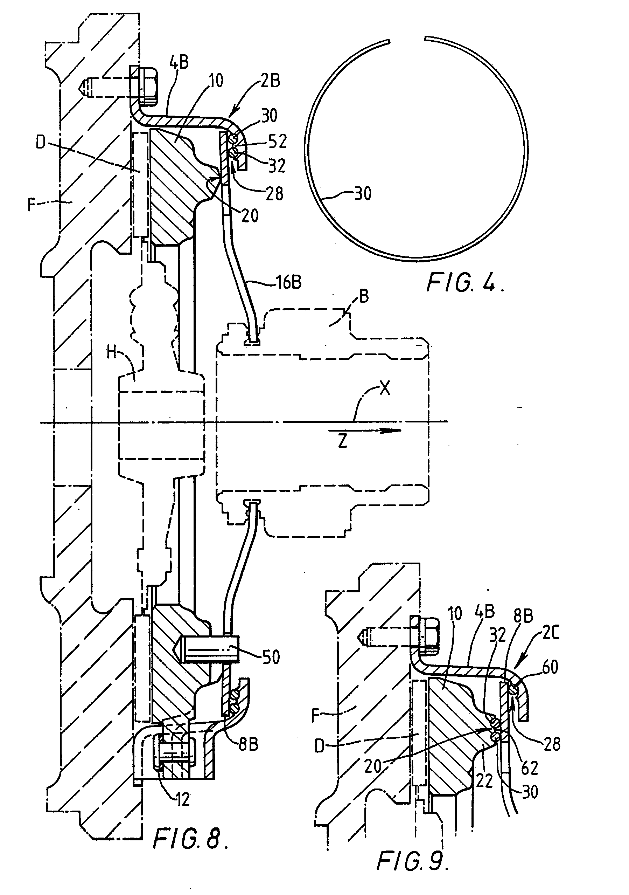

Fig. 8 shows a pull-type clutch comprising a preferred embodiment of cover assembly 2 B, hub H known per se carrying a known driven plate D which may be non-cushioned, and a known clutch release bearing B engaging the radially inner ends of the fingers 16B of the diaphragm spring 8B on freely passing pins 50 pressed to the pressure plate 10. The fulcrum arrangement 20 is of lesser diameter than the fulcrum arrangement 28 on the cover 4B. Fulcrum 28 comprises the less stiff outer wavy ring 30 and the more stiff inner wavy ring 32, each ring being disposed in a respective annular groove in the inner face of the cover 4B and the grooves being radially spaced one from the other by annular rib 52. To release the driven plate the bearing B is pulled in direction Z and is allowed to return in the opposite direction for the clutch to be re-engaged. During the re-engagement movement of the diaphragm spring the latter compresses the less stiff ring 30 first and then the more stiff ring 32.

The fulcrum arrangement 28 in the embodiment of cover assembly 2C in Fig. 9 comprises a flat ring 60, whilst the fulcrum arrangement 20 of the lesser diameter comprises the outer more stiff wavy ring 32 and the inner less stiff wavy ring 30. Each ring 30 32 is disposed in a respective annular groove in the rib arrangement 22, the groove being radially spaced one from the other by a rib 62. During re-engagement of the clutch the diaphragm spring 8B first compresses the ring 30 and then the more stiff ring 32.

In all the above embodiments the wavy rings 30 and 32 are initially formed so that when the ring 30 is to be the outer one it will have the larger normal diameter and will have the smaller normal diameter if it is be the inner ring.

The embodiment in Figs. 1 to 6 may be modified by also forming the fulcrum arrangement 20 with two wavy rings as in Fig. 7 and the embodiment in Fig. 8 may be modified by forming its fulcrum arrangement 20 with wavy rings as in Fig. 9.

In each of the fulcrum arrangements described above comprising the two wavy rings 30 and 32 more than two wavy rings may be used each of a different axial stiffness.

0194001

CLAIMS

1.      A diaphragm spring clutch cover assembly (2;2A;2B) comprising a pressure plate (10), a cover (4;4B), a diaphragm spring (8;8B) having a plurality of radially inwardly directed fingers (16;16B), said diaphragm spring acting between a first annular fulcrum arrangement (20) on the pressure plate and a second annular fulcrum arrangement (28) on the cover, characterised in that at least one of said fulcrum arrangements (20,28) comprises cushioning means of at least first and second resilient substantially concentric wavy rings (32,30) substantially coaxial with the diaphragm spring, and in that each ring has undulations extending substantially parallel to the axis (X) of the diaphragm spring.

2.      A clutch cover assembly as claimed in claim 1, characterised in that undulations of the first wavy ring (32) are more stiff in axial compression (in the axial direction of the diaphragm spring) than the undulations of the second wavy ring (30).

3.      A clutch cover assembly as claimed in claim 2, characterised in that during a clutch engagement movement of the diaphragm spring (8,8B) the first wavy ring (32) is subject to axial compression after the second wavy ring (30).

0194001

4.          A clutch cover assembly as claimed in claim 2 or claim 3, characterised in that the amplitude (A) of any undulation in the second ring (30) is greater than the amplitude (a) of any undulation in the first ring(32).

5.          A clutch cover assembly as claimed in any one of claims 2 to 4, characterised in that the first annular fulcrum arrangement (20) is of greater diameter than the second fulcrum arrangement (28), load exerted on the pressure plate (10) by the diaphragm spring (8) being reducible by application to the fingers (16) of a force acting axially of the diaphragm spring along a direction (Y) towards the pressure plate, and in that the first annular fulcrum arrangement (20) comprises aforesaid cushioning means comprising a said first wavy ring (32) surrounded by a said second wavy ring (30), and/or in that the second annular fulcrum arrangement comprises aforesaid cushioning means comprising a said first wavy ring (32) surrounding the second wavy ring (30).

6.          A clutch cover assembly as claimed in any one of claims 2 to 4, characterised in that the second annular fulcrum arrangement (28) is of greater diameter than the first fulcrum arrangement (20), load exerted on the pressure plate (10) by the diaphragm spring (8B) being reducible by application to the

13    0194001

fingers (16B) of a force acting axially of the diaphragm spring along a direction (Z) away from the pressure plate, and in that the second annular fulcrum arrangement (28) comprises aforesaid cushioning means comprising a said first wavy ring (32) surrounded by a said second wavy ring (30), and/or in that the first annular fulcrum arrangement (20) comprises aforesaid cushioning means comprising a said first wavy ring (32) surrounding a said second wavy ring (30).

7.      A clutch cover assembly as claimed in any one of claims 2 to 6, characterised in that a said fulcrum arrangement (20,28) comprising cushioning means comprising a said first and a said second wavy ring (32,30) and the undulations of the second ring (30) each have substantially the same amplitude (A).

8.      A clutch cover assembly as claimed in claim 7, characterised in that the second ring (30) has the form of a succession of wave shapes providing the undulations of the second ring, and at least two of said wave shapes have substantially the same wave-length(L).

9.      A clutch cover assembly as claimed in claim 7 or claim 8, characterised in that the undulations of the first ring (32) each have substantially the same amplitude (a).

10.　A clutch cover assembly as claimed in claim 9, characterised in that the first ring (32) has the form of a succession of wave shapes providing the undulations of the first ring and at least two of these wave shapes have substantially the same wavelength ($\ell$).

11.　A clutch cover assembly as claimed in any one preceding claim, characterised in that a said fulcrum arrangement (20,28) comprising cushioning means comprises a said first and a said second wavy ring (32,30) and the first and second wavy rings are spaced radially one from the other.

12.　A clutch cover assembly as claimed in any one preceding claim, characterised in that a said fulcrum arrangement (20,28) comprising cushioning means comprises a said first and said second wavy ring (32,30), and the first and second wavy rings are each disposed in a groove.

13.　A clutch cover assembly as claimed in any one preceding claim, characterised in that a said wavy ring (32,30) is a split ring.

14.　A friction clutch comprising a cover assembly as claimed in any one preceding claim.

FIG. 1.

FIG. 5.

0194001

FIG. 2.

FIG. 3.

FIG. 6.

FIG. 7.

*FIG. 4.*

*FIG. 8.*

*FIG. 9.*

))) European Patent
Office

**EUROPEAN SEARCH REPORT**

0194001
Application number

EP  86 30 0121

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 507 268  (VALEO) | | F 16 D   13/71 |
| | --- | | |
| P,A | GB-A-2 144 496  (AUTOMOTIVE) | | |
| | ----- | | |
| | | | **TECHNICAL FIELDS SEARCHED (Int. Cl.4)** |
| | | | F 16 D |

The present search report has been drawn up for all claims

| Place of search | Date of completion of the search | Examiner |
|---|---|---|
| THE HAGUE | 13-05-1986 | ORTHLIEB CH.E. |